# EUROPÄISCHE PATENTANMELDUNG

(11) **EP 4 752 082 A1**
(43) Veröffentlichungstag der Anmeldung: **03.06.2026**
(21) Anmeldenummer: 25218772.9
(22) Anmeldetag: 26.11.2025
(51) Int. Cl.: B65G 1/02

(54) **REGALSTRUKTUR MIT DURCH POSITIONSELEMENTE AUSGERICHTETEN HAUPTSCHIENEN FÜR EIN AUF DEN HAUPTSCHIENEN BEWEGLICHES SHUTTLE**

(30) Priorität: 29.11.2024 DE 102024135494
(71) Anmelder: BITO-Lagertechnik Bittmann GmbH, 55590 Meisenheim (DE)
(72) Erfinder: MARTINI, Dennis Jürgen, 55568 Staudernheim (DE)
(74) Vertreter: Richardt Patentanwälte PartG mbB

(57) **Zusammenfassung**

Offenbart ist eine Regalstruktur (10), wobei die Regalstruktur (10) ein Paar von Hauptschienen (1, 2) aufweist, die parallel entlang einer Hauptrichtung (101) verlaufen und in einem Abstand zueinander angeordnet sind und auf denen ein Shuttle (3) bewegbar ist, wobei die Regalstruktur (10) Querträger (4, 5) aufweist, die entlang einer quer zu der Hauptrichtung (101) ausgerichteten Querrichtung (102) verlaufen, und wobei die Regalstruktur (10) Positionselemente (6, 7) zum Positionieren der Hauptschienen (1, 2) auf den Querträgern (4, 5) aufweist.

## Beschreibung

### GEBIET DER TECHNIK

Die Erfindung betrifft eine Regalstruktur für ein Shuttle. Weiterhin betrifft die Erfindung ein Positionselement zum Ausrichten von Hauptschienen für ein Shuttle.

### STAND DER TECHNIK

Es sind Regalstrukturen bekannt, in welchen sich ein Shuttle bewegen kann. Das Shuttle wird in den meisten Fällen auf Schienen bewegt. Je genauer die Schienen zueinander ausgerichtet sind, desto ruhiger kann das Shuttle auf den Schienen bewegt werden und umso größere Geschwindigkeiten können mit dem Shuttle realisiert werden. Ein Shuttlelager mit Laufschienen ist z.B. aus der EP3321216A1 bekannt.

### ZUSAMMENFASSUNG

Es ist eine Aufgabe der Erfindung, eine verbesserte Regalstruktur und ein Positionselement zum Positionieren von Hauptschienen einer Regalstruktur für ein Shuttle bereitzustellen. Die der Erfindung zugrunde liegenden Aufgaben werden durch die Merkmale der unabhängigen Ansprüche gelöst.

In einem Aspekt ist eine Regalstruktur offenbart, wobei die Regalstruktur ein Paar von Hauptschienen aufweist, die parallel entlang einer Hauptrichtung verlaufen und in einem Abstand zueinander angeordnet sind und auf denen ein Shuttle bewegbar ist. Die Regalstruktur weist Querträger auf, die entlang einer quer zu der Hauptrichtung ausgerichteten Querrichtung verlaufen. Weiterhin weist die Regalstruktur Positionselemente zum Positionieren der Hauptschienen auf den Querträgern auf. Bezüglich des jeweiligen Positionselementes erstreckt sich das Positionselement entlang der Querrichtung und weist entlang der Querrichtung gesehen zwei Außenteile und ein Innenteil auf. Durch eines der Außenteile und das Innenteil ist jeweils eine nach oben offene Aussparung gebildet, wobei in den Aussparungen die Hauptschienen angeordnet sind.

Weiterhin, bezüglich des jeweiligen Positionselementes, weisen zu dem Innenteil gewandte Seiten der Außenteile jeweils einen Anschlag auf. Die Hauptschienen berühren den Anschlag an einem jeweiligen Anschlagspunkt.

In einem weiteren Aspekt ist ein Positionselement zum Positionieren von einem Paar von Hauptschienen einer Regalstruktur für ein Shuttle auf einem quer zu den Hauptschienen verlaufenden Querträger offenbart. Das Positionselement weist Bohrungen zum Befestigen des Positionselementes an dem Querträger auf. Weiterhin weist das Positionselement in seiner Hauptrichtung gesehen zwei Außenteile und ein Innenteil auf, wobei jeweils durch eines der Außenteile und das Innenteil eine nach oben offene Aussparung zum Einsetzen der Hauptschienen gebildet ist. Die zu dem Innenteil gewandten Seiten der Außenteile weisen jeweils einen Anschlag für die Hauptschienen auf.

Des Weiteren wird ein Regalsystem offenbart. Das Regalsystem weist ein Paar von Hauptschienen, mehrere Querträger und zumindest ein Positionselement auf.

### KURZE BESCHREIBUNG DER ZEICHNUNGEN

Im Folgenden werden Beispiele anhand der Zeichnungen näher erläutert. Es zeigen:
Fig. 1 eine Regalstruktur für Shuttle mit Hauptschienen und Positionselementen zum Positionieren der Hauptschienen;
Fig. 2 eine vergrößerte perspektivische Ansicht von zwei Positionselementen;
Fig. 3 eine Seitenansicht eines ersten Positionselementes der Positionselemente mit einer ersten und einer zweiten Aussparung zum Aufnehmen der Hauptschienen;
Fig. 4 eine vergrößerte Ansicht einer ersten Aussparung;
Fig. 5 eine weitere Ansicht einer ersten Aussparung mit dem Shuttle;
Fig. 6 eine weitere Variante eines ersten Positionselementes;
Fig. 7 eine weitere Variante eines ersten Positionselementes.

### DETAILLIERTE BESCHREIBUNG

Dadurch, dass die jeweilige Hauptschiene den Anschlag des jeweiligen Außenteils an dem jeweiligen Anschlagspunkt berührt, kann bezogen auf den jeweiligen Querträger eine Bewegung der jeweiligen Hauptschiene in Richtung des jeweiligen Außenteils des jeweiligen Querträgers über den Anschlagspunkt hinaus verhindert werden. Dies könnte zum einen eine Montage der Hauptschienen an dem jeweiligen Querträger erleichtern. Insbesondere kann der Anschlagspunkt eine Endposition einer Bewegung der jeweiligen Hauptschiene bei seiner Montage entlang einer Richtung vorgeben, die parallel zu der Querrichtung und hin zu dem jeweiligen Außenteil, d.h. nach Außen, verläuft. Dies könnte es ermöglichen, die Hauptschienen bei ihrer Montage an den Querträgern gegen die Anschläge zu pressen und dadurch die Hauptschienen in der Querrichtung gesehen mit einer höheren Präzision in Bezug zu dem jeweiligen Querträger auszurichten und an dem jeweiligen Querträger zu befestigen als dies ohne eine Verwendung der Positionselemente möglich wäre. Dadurch könnte eine Genauigkeit einer Lage der Hauptschienen in der Querrichtung in Bezug zu den Querträgern an mehreren Positionen entlang der Hauptrichtung erhöht werden. Die Positionen sind insbesondere diejenigen Positionen, an denen die Querträger die Hauptschienen kreuzen. Praktischerweise sind die Hauptschienen auf den Querträgern derart montiert, dass die Anschlagspunkte, an welchen die jeweilige Hauptschiene den jeweiligen Anschlag berührt, auf einer jeweiligen Gerade liegen, die parallel zu der Hauptrichtung verläuft.

Aufgrund einer höheren Genauigkeit der Lage der Hauptschienen in der Querrichtung in Bezug zu den Querträgern an den mehreren Positionen könnten die Hauptschienen näher an einer Ideallinie verlaufen, die genau gerade und parallel zu der Hauptrichtung verläuft. Dadurch könnte ein Spurmaß einer Fahrbahn des Shuttles, die durch das Paar von Hauptschienen gebildet wird, verbessert werden. Es könnte sichergestellt werden, dass dadurch aufgrund einer sehr präzisen Ausrichtung der Hauptschienen zueinander über die Positionselemente die Hauptschienen sehr exakt parallel zueinander ausgerichtet werden können. Insgesamt könnte dadurch eine höhere Geschwindigkeit mit dem Shuttle in der Hauptrichtung realisiert werden. Dies im Folgenden detaillierter beschrieben.

Die präzisere Ausrichtung der Hauptschienen zueinander könnte es ermöglichen, einen Abstand zwischen den Führungsrollen, die an einer Führungsfläche der jeweiligen Hauptschiene entlang rollen kann, und der Führungsfläche geringer auszulegen. Dadurch könnte eine etwaige Schlingerbewegung des Shuttles beim Fahren auf den Hauptschienen reduziert werden. Dies könnte eine Reibung der Führungsrollen an den Führungsflächen reduzieren und eine Anzahl von Stößen der Führungsrollen an den Führungsflächen verringern. Dadurch könnte sich zum einen ein geringerer Verschleiß der Führungsrollen und dadurch eine Möglichkeit für längere Wartungsintervalle ergeben. Zum anderen könnte eine höhere Endgeschwindigkeit des Shuttles erzielt werden, da mithilfe des Shuttles transportierbare Waren weniger Stößen ausgesetzt sind. Im Ergebnis könnte dadurch ein Warendurchsatz innerhalb der Regalstruktur erreicht werden. Darüber hinaus könnte die reduzierte Reibung der Führungsrollen an den Führungsflächen eine Energiebilanz des Shuttles verbessern, da die reduzierte Reibung Reibungsverluste beim Fahren des Shuttles vermindert und dadurch eine Akkulaufzeit des Shuttles erhöht werden könnte. Es versteht sich, dass sich hierbei auch längere Einsatzzeiten des Shuttles mit einer Akkuladung ergeben könnten.

Aufgrund der durch die Positionselemente bereitgestellte höhere Genauigkeit der Lage der Hauptschienen in der Querrichtung in Bezug zu den Querträgern könnte prinzipiell eine erforderliche Genauigkeit der Hauptschienen reduziert werden. Dies könnte es ermöglichen, die Hauptschienen in Form von standardisierten Kant- oder Profilbauteilen, beispielsweise aus Stahl, zu gestalten. Dies könnte eine Herstellung der Regalstruktur vereinfachen.

In einer möglichen Ausgestaltung sind die Hauptschienen, die Querträger und die Positionselemente lösbar miteinander verbunden. Weiterhin können die Hauptschienen, die Querträger und die Positionselemente und jeweils separate Bauteile bilden. Die Ausgestaltung der Hauptschienen, Querträger und Positionselemente als separate Bauteile könnte eine Herstellung der Positionselemente unter Berücksichtigung einer vorgegebenen Genauigkeit der Anschläge, insbesondere der Anschlagpunkte, vereinfachen. Hypothetisch soll im Folgenden angenommen werden, dass das Positionselement und der Querträger in Form eines Bauteils ausgebildet wären. In diesem Fall müssten Befestigungsmittel, insbesondere passive Befestigungsmittel wie beispielsweise Bohrungen, des Querträgers, mit denen der Querträger in der Regalstruktur montierbar ist, mit derselben Genauigkeit wie die Anschläge, insbesondere die Anschlagpunkte, gefertigt werden, damit nach einem Montieren des Querträgers in der Regalstruktur die vorgegebene Genauigkeit der Anschläge überhaupt erzielbar ist. Weiterhin müsste ein Abstand zwischen den Anschlagpunkten und den Befestigungsmitteln in der Querrichtung mit der vorgegebenen Genauigkeit der Anschläge gefertigt werden, um die Anschlagpunkte mit der vorgegebenen Genauigkeit der Anschläge in der Regalstruktur zu positionieren. Auf diesen erheblichen Fertigungsaufwand bei der Herstellung des Querträgers könnte nun verzichtet werden, wenn die Hauptschienen, die Querträger und die Positionselemente lösbar miteinander verbunden sind und jeweils separate Bauteile bilden.

Weiterhin könnten die Querträger und die von dem Querträger separat ausgebildeten Positionselemente wie folgt in der Regalstruktur montiert werden. Zunächst könnten der Querträger an einem senkrechten Träger der Regalstruktur befestigt werden. Im Anschluss daran könnten die Positionselemente auf die Querträger gelegt werden und mit einem Messinstrument, wie beispielsweise einem Linienlaser, derart zueinander ausgerichtet werden, dass die Anschlagpunkte von mehreren Positionselementen, insbesondere zumindest drei Positionselementen, auf einer Geraden liegen. Im Anschluss daran könnten die Positionselemente an den Querträgern befestigt werden. Hierbei können insbesondere Bohrungen in den Querträgern in einem Zustand erstellt werden, bei welchem sich das Positionselement in Kontakt, insbesondere in einer in Bezug zu den anderen Positionselementen ausgerichteten Position, mit dem Querträger befindet. Dadurch, dass die Positionselemente separat zu den Querträgern ausgebildet sind, könnte eine Genauigkeit einer Endposition der Querträger in der Querrichtung zu vernachlässigen sein. Diese würde in der Regel von einer Ausrichtung der senkrechten Träger zueinander in der Querrichtung abhängen. Es versteht sich, dass die Ausrichtung der senkrechten Träger zueinander in der Querrichtung mit einer Genauigkeit, die der erzielbaren Genauigkeit der Anschlagpunkte in der Querrichtung bei der oben beschriebenen Montage der Positionselemente, nur sehr aufwendig realisierbar wäre, insbesondere fast unmöglich ist.

In einer Weiterbildung weisen die Positionselemente Bohrungen zum Befestigen der Positionselemente an den Querträgern auf. Mithilfe der Bohrungen könnten die Positionselemente an den Querträgern befestigt, beispielsweise verschraubt oder genietet, werden. Weiterhin könnten die Bohrungen als Führungen zum Bohren von Löchern in den Querträgern in einem Zustand verwendet werden, in welchem sich das Positionselement in einer in Bezug zu den anderen Positionselementen ausgerichteten Position auf dem Querträger befindet. Ein Material der Positionselemente in einer Belastungszone der Bohrungen kann nach einer Variante eine höhere Festigkeit als in übrigen Zonen des Positionselementes aufweisen. Dies könnte ein Verschleiß der Bohrungen beim Verwenden der Bohrungen als Führungen zum Bohren der Löcher in den Querträgern reduzieren.

Die Belastungszone kann eine Randzone um ein durch die Bohrung vorgegebenes Loch und/oder einen Mantelbereich der Bohrung umfassen. Die erhöhte Festigkeit im Bereich der Belastungszone kann insbesondere durch eine lokale Materialmodifikation erzielt werden. Beispielsweise kann das Material im Bereich der Belastungszone durch eine Wärmebehandlung wie Härten, Anlassen oder induktives Randschichthärten, durch eine Kaltverfestigung infolge von Rollieren, Kalibrieren oder einer Verdrängungsumformung sowie durch ein gezieltes lokales Pressen oder Verdichten des Materials verfestigt sein.

In einer Weiterbildung ist das jeweilige Positionselement einstückig ausgebildet. Bei dieser Weiterbildung sind das Innenteil und die beiden Außenteile des jeweiligen Positionselementes in Form eines jeweiligen gemeinsamen Bauteils ausgeführt. Dadurch könnte eine noch höhere Genauigkeit der Lage der Hauptschienen in der Querrichtung in Bezug zu den Querträgern erzielt werden. Die Positionselemente können beispielsweise mittels Laserschnittverfahren hergestellt sein. Dadurch könnten die Anschläge im Vergleich zu einer Herstellung mithilfe eines Fräsverfahrens präziser hergestellt werden. Grundsätzlich sind jedoch auch hochpräzise Fräsverfahren, Wasserstrahlschneideverfahren oder 3D-Druckverfahren denkbar.

Im Folgenden wird sich in vielen Fällen auf ein Positionselement der Positionselemente bezogen. Es versteht sich, dass in den meisten Fällen die Positionselemente gleich ausgebildet sein können. Daher werden im Folgenden in vielen Fällen einzelne Varianten des Positionselementes beschrieben, welches stellvertretend für die Gesamtheit der Positionselemente steht.

Vorzugsweise sind die Querträger, insbesondere was einen Abstand der Anschlagspunkte zu einem äußersten Punkt der Außenteile in der Querrichtung betrifft, baugleich ausgeführt. Weiterhin kann vorgesehen sein, dass ein Abstand zwischen dem jeweiligen Anschlagspunkt des jeweiligen Positionselementes und einem äußersten Punkt eines jeweiligen Endes desjenigen Querträgers, an welchem das jeweiligen Positionselement montiert ist, in der Querrichtung für alle Positionselemente gleich ist. Prinzipiell kann jedoch vorgesehen sein, dass ein oder mehrere der Querträger kürzer als die übrigen Querträger sind. In diesem Fall können die Abstände zwischen den Anschlagspunkten und den äußersten Punkten unterschiedlich sein.

In einer möglichen Ausgestaltung sind den Außenteilen zugewandte Seiten des Innenteils derart geformt, dass die Seiten des Innenteils bei einem Einsetzen der Hauptschienen in die Aussparungen eine Umlenkung einer Bewegung der Hauptschienen entlang einer Einsetzrichtung, die von oben nach unten gerichtet ist, hin zu einer Bewegung der Hauptschienen in Richtung der Anschläge bewirken. Diese Ausgestaltung des Innenteils könnte eine Bewegung der Hauptschienen in Richtung der Anschläge allein dadurch bewirken, dass die Hauptschienen von oben in die Einsetzrichtung in die Aussparungen gesetzt werden. Unter Wirkung der Gewichtskraft könnten die Hauptschienen nach unten beschleunigt werden. Die Umlenkung der Bewegung der Hauptschienen in Richtung der Anschläge könnte bewirken, dass sich die Hauptschienen ohne ein Führen der Hauptschienen mit einer menschlichen Hand oder einer Roboterhand bis hin zu den Anschlägen bewegen können oder zumindest die manuelle oder robotergeführte Bewegung vereinfacht wird. Dadurch könnte insbesondere die Endposition der jeweiligen Hauptschiene bei der Montage der jeweiligen Hauptschiene auf einfache Weise erreicht werden.

Gemäß einer Variante nimmt eine Breite des Innenteils entlang der Querrichtung in der Einsetzrichtung stetig zu. Bei dieser Variante kann insbesondere eine Form der den Außenteilen zugewandten Seiten des Innenteils durch einen sich in der Einsetzrichtung stetig vergrößernden Querschnitt des Innenteils gegeben sein. Der sich vergrößernde Querschnitt verläuft parallel zu einer durch die Hauptschienen gebildeten Ebene. Diese Variante stellte eine Möglichkeit dar, wie die Seiten des Innenteils ausgebildet sein können, um bei dem Einsetzen der Hauptschienen in die Aussparungen die Umlenkung der Bewegung der Hauptschienen entlang der Einsetzrichtung hin zu der Bewegung der Hauptschienen in Richtung der Anschläge zu bewirken. Des Weiteren könnte diese Variante den Vorteil haben, dass Kraftspitzen in einem Übergangsbereich, der zwischen einem oberen Bereich des Positionselementes und einem unteren Bereich des Positionselementes liegt, reduziert werden können. In der durch die Hauptschienen gebildeten Ebene können Oberseiten der Hauptschienen liegen.

Gemäß einer weiteren Ausgestaltung liegen eine Oberseite des Innenteils, Oberseiten der Außenteile und die Oberseiten der Hauptschienen in der Ebene. Die Ebene kann eine Fahrebene bilden, auf welcher Räder des Shuttles z.B. bei einer Querfahrt abrollen können. Die Hauptschienen dienen hier insbesondere einer Längsfahrt des Shuttles.

In einer Weiterbildung dieser Ausgestaltung weist die Regalstruktur in Verlängerung der Positionselemente entlang der Querrichtung Nebenschienen auf. Bei dieser Weiterbildung liegen Oberseiten der Nebenschienen in der Ebene, wobei das Shuttle auf den Nebenschienen und dem Positionselement, insbesondere bei einer Querfahrt in der Querrichtung, bewegbar ist. Diese Weiterbildung ermöglicht es, das Positionselement zum einen zum genauen Positionieren der Hauptschienen in der Querrichtung zu Verwenden und zum anderen das Positionselement als Kreuzungselement für das Shuttle zu verwenden. Bei der Verwendung des Positionselementes als Kreuzungselement verbindet zumindest ein erstes Paar von Positionselementen ein erstes Paar von Nebenschienen, dessen Oberseiten in der Fahrebene auf einer ersten Seite der Hauptschienen liegen, mit einem zweiten Paar von Nebenschienen, dessen Oberseiten in der Fahrebene auf einer zweiten Seite der Hauptschienen, die in der Fahrebene gegenüber von der ersten Seite liegt, angeordnet sind. Die Oberseiten der beiden Hauptschienen trennen innerhalb der Fahrebene die erste Seite von der zweiten Seite. Das erste Paar von Nebenschienen und das zweite Paar von Nebenschienen bilden zusammen mit dem ersten Paar von Positionselementen ein mit dem Shuttle in der Querrichtung durchgängig befahrbares Gleis von Schienen.

In einer weiteren Ausgestaltung ist vorgesehen, dass bezüglich des jeweiligen Außenteils ein Abstand zwischen der dem Innenteil zugewandten Seite des Außenteils und einer zur Querrichtung senkrechten Ebene, in welcher der Anschlagspunkt des Außenteils liegt, zumindest in einem Bereich unterhalb des Anschlags von oben nach unten stetig zunimmt. Dadurch kann sichergestellt werden, dass die jeweilige Hauptschiene nicht an einem Punkt des jeweiligen Außenteils anstoßen kann, welcher in der Querrichtung gesehen weiter weg von dem Innenteil als der Anschlagpunkt des jeweiligen Außenteils liegt. Diese Ausgestaltung könnte somit eine Sicherheit darüber erhöhen, dass die genaue Lage der Hauptschienen in der Querrichtung bei der Montage der Hauptschienen an den Querträgern stets realisiert wird. Insbesondere ist der Abstand zwischen der dem Innenteil zugewandten Seite des Außenteils und der zur Querrichtung senkrechten Ebene in einem Bereich, in welchem sich eine Oberfläche des Querträgers befindet, am größten.

In einer weiteren Ausgestaltung ist eine Auflagefläche für die Hauptschienen (auf dem Querträger) ausschließlich durch den Querträger (selbst) gebildet (und insbesondere nicht durch die Positionselemente). Die Auflagefläche kann hierbei Auflagekräfte aufnehmen, die in Richtung der Gewichtskraft der Hauptschienen gerichtet ist. Für den Fall, dass die Fahrebene geneigt ist, kann die Richtung der Auflagekräfte als senkrecht zu der Oberseite des Innenteils, im Folgenden als z-Richtung bezeichnet, beschrieben werden. Diese Ausgestaltung könnte den Vorteil haben, dass das Positionselement keine Stützkräfte zum Abstützen der Hauptschienen in Richtungen, die senkrecht zu der Oberseite des Innenteils verlaufen, ausbilden muss. Dies erlaubt es, das Positionselement geringer als den Querträger zu dimensionieren und damit eine präzise Fertigung des Positionselements aufgrund geringeren Materialaufwands (z.B. weniger Material Abtragen beim Fräsen, Schneiden) einfacher zu realisieren. Dies erlaubt es ferner, das Positionselement z.B. derart auszuführen, dass die größten Kräfte, die das Positionselement abstützen kann, parallel zu der Querrichtung ausgerichtet sind. Dies stellt eine weitere Variante des Positionselementes dar.

In einer weiteren Ausgestaltung liegt eine tiefste Stelle der Aussparung unterhalb der Oberseite des Querträgers. Dies stellt eine Möglichkeit dar, zu realisieren, dass die Auflagefläche für die Hauptschienen ausschließlich durch den Querträger gebildet ist. Prinzipiell kann die Aussparung in einem gesamten Auflagebereich des Querträgers, in welchem die Hauptschienen auf dem Querträger aufliegen, tiefer als die Oberseite des Querträgers sein, auch wenn der Querträger in z-Richtung gesehen Toleranzen aufweisen sollte. Dies könnte sicherstellen, dass die Hauptschienen das Positionselement in der z-Richtung nicht belasten können.

In einer weiteren Ausgestaltung kann vorgesehen sein, dass Ränder der Hauptschienen sich parallel zu dem Querträger erstrecken und auf einer Oberseite des Querträgers aufliegen. Die sich parallel zu dem Querträger erstreckenden Ränder könnten eine Sicherheit gegen ein Verdrehen der Hauptschienen um ihre Längsachse erhöhen. Dies könnte insbesondere dann von Vorteil sein, wenn der oben beschriebene Abstand zwischen der dem Innenteil zugewandten Seite des Außenteils und der zur Querrichtung senkrechten Ebene, in welcher der Anschlagspunkt des Außenteils liegt, zumindest in dem Bereich unterhalb des Anschlags von oben nach unten stetig zunimmt. In diesem Fall könnten die Hauptschienen in dem Bereich unterhalb des Anschlags nicht durch das Positionselement seitlich abgestützt werden. Das Positionselement könnte nach einer möglichen Anwendung vornehmlich zum Ausrichten der Hauptschienen in Bezug zu den Querträgern bei der Montage der Hauptschienen dienen. Nachdem die Hauptschienen an den Querträgern befestigt worden sind, könnte in einer möglichen Anwendung ein Spiel zwischen den Anschlagpunkten und den Hauptschienen vorliegen.

In einer Weiterbildung dieser Ausgestaltung können die Hauptschienen in einer Ebene senkrecht zur Hauptrichtung einen insbesondere hutförmigen Querschnitt aufweisen, der vorzugsweise nach unten offen ist. Bei dieser Weiterbildung können die Ränder durch die Hutform gebildet sein. Die Ränder können insbesondere als Flansche ausgebildet sein. Die Hutform könnte es ermöglichen, die Hauptschienen aus einem Blech durch ein Tiefziehverfahren herzustellen. Dabei können die Hauptschienen mittels Zugdruckumformen eines Blechzuschnitts in einen einseitig offenen Hohlkörper hergestellt werden. Das Tiefziehverfahren ist besonders gut geeignet, um hohe Stückzahlen der Hauptschienen mit vergleichsweise hoher Genauigkeit herzustellen. In einer möglichen Ausgestaltung sind die Ränder an der Oberseite des Querträgers verschraubt. Hierdurch kann eine beidseitige Verschraubung der jeweiligen Hauptschiene an dem Querträger bereitgestellt werden.

In einer weiteren Ausgestaltung weist das Positionselement senkrecht zur Querrichtung gesehen einen nach unten (zum Querträger hin) offenen zumindest teilweise U-förmigen Querschnitt auf. Dies ermöglicht es, das Positionselement von oben auf den Querträger aufzusetzen. Insbesondere können nach unten gerichtete Schenkel des U-förmigen Positionselementes an Seitenwände des Querträgers, die parallel zu der Querrichtung verlaufen, geschoben werden, um die Schenkel an den Seitenwänden der Querträger zu befestigen, zum Beispiel anzuschrauben oder anzunieten.

In einer weiteren Ausgestaltung ist die U-Form des Querschnittes des Positionselementes durch einen Steg und die Schenkel gebildet, die parallel zueinander verlaufen. Der Steg verbindet die beiden Schenkel. Derjenige Rand der Ränder der jeweiligen Hauptschiene, welcher zu dem jeweiligen Außenteil zugewandt ist, kann zwei in der Querrichtung verlaufende Aussparungen zur teilweisen Aufnahme der Schenkel in den Aussparungen aufweisen. Alternativ oder zusätzlich kann derjenige Rand der Ränder der jeweiligen Hauptschiene, welcher zu dem jeweiligen Innenteil zugewandt ist, zwei in der Querrichtung verlaufende weitere Aussparungen zur teilweisen Aufnahme der Schenkel in den weiteren Aussparungen aufweisen.

Es versteht sich, dass in einer möglichen Variante der Regalstruktur die Schenkel in die Aussparungen der Ränder und/oder in die weiteren Aussparungen der Ränder eingeschoben sind. Die Aussparungen der Ränder und/oder in die weiteren Aussparungen der Ränder der Hauptschienen könnten ermöglichen, eine Bewegung der Hauptschienen entlang der Hauptrichtung zu blockieren, wenn die Schenkel in den Aussparungen der Ränder und/oder in den weiteren Aussparungen der Ränder zumindest teilweise aufgenommen sind. Somit könnte das Positionselement für die Hauptschienen nicht nur eine Lage in Bezug zu dem Querträger in der Querrichtung sondern auch in der Hauptrichtung vorgeben. Es versteht sich, dass hierbei das Positionselement an dem Querträger befestigt ist.

Gemäß einer praktischen Weiterbildung weist der Steg an dem jeweiligen Außenteil eine Bohrung zum Durchschieben eines Schraubwerkzeugs auf. Diese Weiterbildung ermöglicht es, das Schraubwerkzeug durch denjenigen Teil des Steges zu schieben, der sich an dem jeweiligen Außenteil befindet, und denjenigen Rand der jeweiligen Hauptschiene an dem Querträger zu verschrauben, der durch den Steg in der z-Richtung abgedeckt ist.

Im Allgemeinen weist die Regalstruktur zumindest zwei Längsträger auf, die parallel zu der Hauptrichtung verlaufen und einen Abstand zueinander aufweisen. Die Querträger können an den beiden Längsträgern befestigt sein. In diesem Fall können gemäß einer möglichen Ausgestaltung die Außenteile des Positionselementes mit ihrer jeweiligen Außenseite an einer jeweiligen Innenseite der Längsträger anstoßen. Hierdurch könnte eine gleichartige Ausrichtung der Positionselemente in der Querrichtung unter Verwendung der Längsträger erfolgen.

Es wird weiterhin ein Bausatz zum Montieren der Regalstruktur nach einer der oben beschriebenen Varianten vorgeschlagen. Der Bausatz umfasst die Hauptschienen, die Querträger und die Positionselemente. Die Hauptschienen können eine erste Art von Bauteilen des Bausatzes, die Querträger eine zweite Art von Bauteilen des Bausatzes und die Positionselemente eine dritte Art von Bauteilen des Bausatzes ausbilden. Das jeweilige Positionselement kann an einem jeweiligen Querträger der Querträger befestigbar sein. Weiterhin kann das jeweilige Positionselement in einem montierten Zustand der Regalstruktur an dem jeweiligen Querträger befestigt sein. Insbesondere können die dritte Art der Bauteile, d.h. die Positionselemente, eine geringere Fertigungstoleranz, insbesondere in einem Bereich der Anschläge, als die erste und zweite Art der Bauteile aufweisen.

Es versteht sich, dass eine oder mehrere der vorgenannten Varianten miteinander kombiniert werden können, solange sich die Varianten nicht gegenseitig ausschließen.

Im Folgenden werden einander ähnliche Elemente mit den gleichen Bezugszeichen gekennzeichnet.

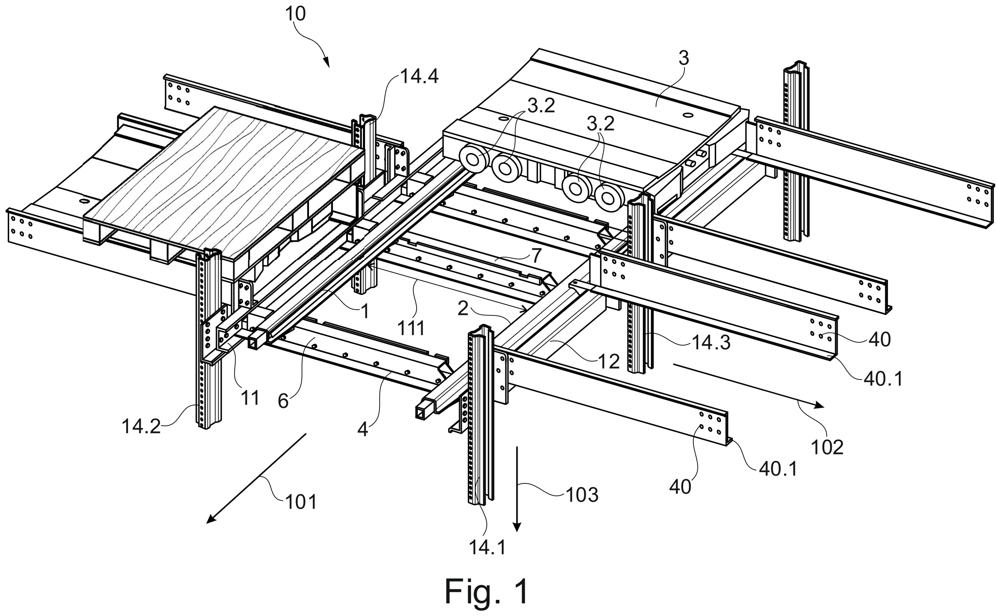

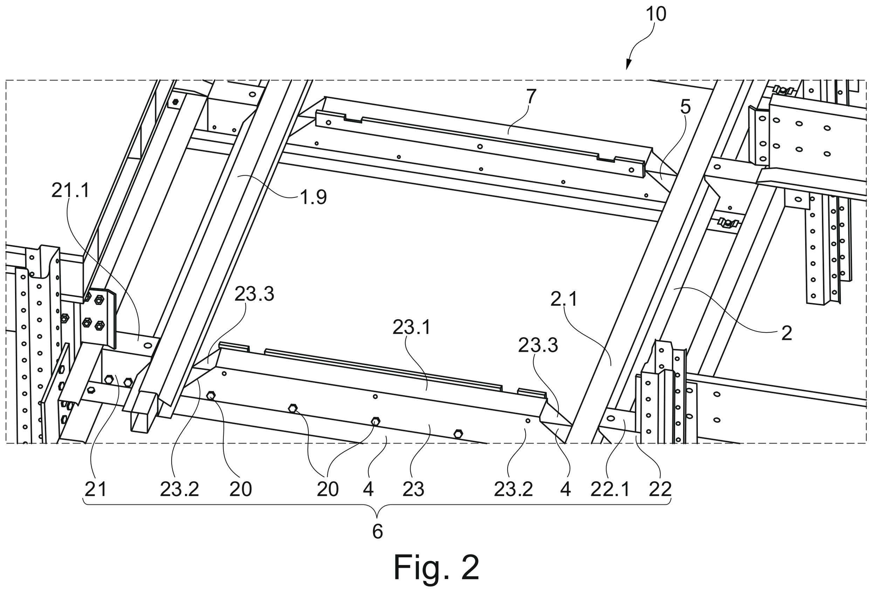

Fig. 1 zeigt eine Regalstruktur 10, die ein Paar von Hauptschienen aufweist. Das Paar von Hauptschienen umfasst eine erste Hauptschiene 1 und eine zweite Hauptschiene 2. Die Hauptschienen 1, 2 verlaufen parallel entlang einer Hauptrichtung 101 und sind in einem ersten Abstand 111 zueinander angeordnet. Auf den Hauptschienen 1, 2 ist ein Shuttle 3 bewegbar. Die Regalstruktur 10 weist weiterhin Querträger auf. Die Querträger umfassen beispielsweise einen in Fig. 1 dargestellten ersten Querträger 4 und einen zweiten Querträger 5, der exemplarisch in Fig. 2 deutlicher dargestellt ist. Die Querträger 4, 5 verlaufen entlang einer Querrichtung 102, die senkrecht zu der Hauptrichtung 101 ausgerichtet ist.

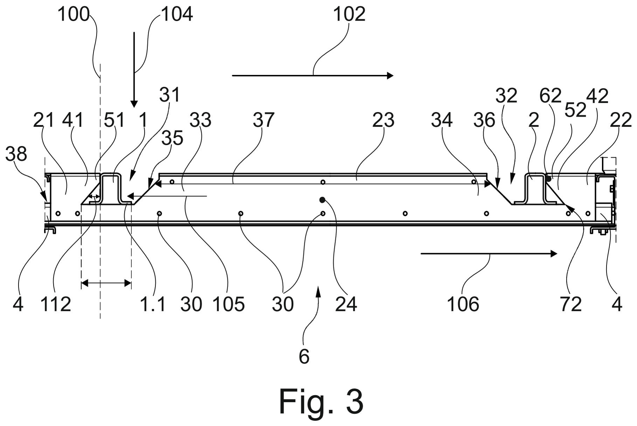

Die Regalstruktur 10 weist weiterhin Positionselemente, wie beispielsweise ein erstes Positionselement 6 und ein zweites Positionselement 7 zum Positionieren der Hauptschienen 1, 2 auf den Querträgern 4, 5 auf. Das erste Positionselement 6 ist exemplarisch in Fig. 3 in einer Seitenansicht gezeigt. Das erste Positionselement 6 weist eine Haupterstreckungsrichtung auf, die parallel zu der Querrichtung 102 verläuft. Entlang der Haupterstreckungsrichtung des ersten Positionselementes 6 weist das erste Positionselement 6 zwei Außenteile, darunter ein erstes Außenteil 21 und ein zweites Außenteil 22, und ein Innenteil 23 auf. Das Paar von Hauptschienen 1, 2, die Querträger 4, 5 und die Positionselemente 6, 7 können zusammen ein Regalsystem ausbilden.

Entlang einer Dimension, die entlang der Querrichtung 102 verläuft, ist das Innenteil 23 von den beiden Außenteilen 21, 22 umgeben. Daher wird im Rahmen dieser Offenbarung der Begriff "Innenteil" verwendet. Alternativ oder zusätzlich kann das Innenteil 23 dadurch spezifiziert werden, dass sich ein Schwerpunkt 24 des ersten Positionselementes 6 innerhalb von Außenflächen des Innenteils 23 befindet und die beiden Außenteile 21, 22 sich von dem Schwerpunkt 24 aus gesehen in einer Richtung nach "außen" befinden. Die Richtung nach "außen" ist als eine Richtung zu verstehen, die von dem Schwerpunkt 24 weg zeigt. Entsprechend befinden sich die Außenteile 21, 22 von dem Schwerpunkt 24 aus gesehen weiter außen als Teile des Innenteils 23.

Das erste Positionselement 6 weist zwischen dem ersten Außenteil 21 und dem Innenteil 23 eine erste Aussparung 31 auf. Insbesondere ist die erste Aussparung 31 durch das erste Außenteil 21, insbesondere durch eine zu dem Innenteil 23 gerichtete Seite 41 des ersten Außenteils 21, und eine zu dem ersten Außenteil 21 zugewandte erste Seite 33 des Innenteils 23 gebildet. Wie exemplarisch in Fig. 3 gezeigt, ist die erste Hauptschiene 1 in der ersten Aussparung 31 angeordnet.

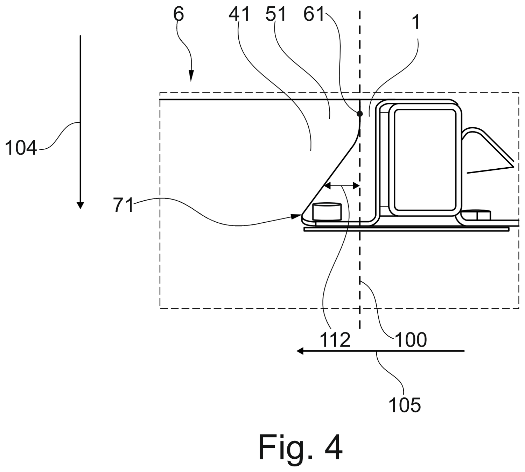

Fig. 4 zeigt eine vergrößerte Ansicht eines ersten Außenteils 21 des ersten Positionselementes 6. Im Folgenden wir ohne Beschränkung der Allgemeinheit davon ausgegangen, dass es sich um das Außenteil 21 der Figur 1 handelt. Die zu dem Innenteil 23 gewandte Seite 41 des ersten Außenteils 21 weist einen ersten Anschlag 51 auf. Die erste Hauptschiene 1 berührt den Anschlag 51 zumindest an einem ersten Anschlagpunkt 61. In der Regel berührt die erste Hauptschiene 1 den ersten Anschlag 51 an mehreren Anschlagpunkten, die zusammen eine erste Berührungsfläche ausbilden können. Die erste Berührungsfläche umfasst dabei den ersten Anschlagspunkt 61. Die erste Berührungsfläche verläuft parallel zu der Hauptrichtung 101.

Der erste Anschlag 51 kann insbesondere als ein Bereich des ersten Außenteils 21 spezifiziert sein, welcher von einem äußersten ersten Bereich 71 der ersten Aussparung 31 aus gesehen weiter innen in Richtung des Schwerpunktes 24 angeordnet ist. Dadurch kann sichergestellt werden, dass die erste Hauptschiene 1 zuerst an dem ersten Anschlag 51 anschlägt, wenn die erste Schiene 1 nach einem Einsetzen von oben nach unten in Richtung einer in Fig. 4 gezeigten Einsetzrichtung 104 in eine erste Anschlagsrichtung 105 bewegt wird. Die erste Anschlagsrichtung 105 ist in Fig. 4 dargestellt und zeigt parallel zu der Querrichtung 102 gesehen nach außen zu dem ersten Anschlag 51.

Analog ist durch das zweite Außenteil 22 und das Innenteil 23 eine zweite nach oben offene Aussparung 32 gebildet. Die zweite Hauptschiene 2 ist in der zweiten Aussparung 32 angeordnet. Eine zu dem Innenteil 23 gewandte Seite 42 des zweiten Außenteils 22 weist einen Anschlag auf, der im Folgenden als zweiter Anschlag 52 bezeichnet wird. Die zweite Hauptschiene 2 berührt den zweiten Anschlag 52 an einem zweiten Anschlagspunkt 62.

Analog zu dem ersten Anschlag 51 kann der zweite Anschlag 52 als derjenige Bereich des zweiten Außenteils 22 verstanden werden, welcher bezogen auf einen äußersten Punkt 72 der zweiten Aussparung 32 weiter innen in Richtung des Schwerpunktes 24 angeordnet ist.

Die Regalstruktur 10 kann Längsträger, beispielsweise einen ersten Längsträger 11 und einen zweiten Längsträger 12, umfassen, an denen die Querträger, insbesondere der erste Querträger 4 und der zweite Querträger 5, befestigt sind. Fig. 1 zeigt eine Variante, bei welcher die Querträger 4, 5 an dem ersten Längsträger 11 und dem zweiten Längsträger 12 mittels Schrauben befestigt sind. Wie in Fig. 1 gezeigt, kann die Regalstruktur 10 in einer vertikalen Richtung 103 verlaufende Stützen, wie zum Beispiel eine erste Stütze 14.1, eine zweite Stütze 14.2, eine dritte Stütze 14.3 und eine vierte Stütze 14.4, umfassen. An den Stützen können die Längsträger 11, 12 montiert sein.

Das Innenteil 23 weist die dem ersten Außenteil 21 zugewandte erste Seite 33 und eine dem zweiten Außenteil 22 zugewandte zweite Seite 34 auf. Die erste Seite 33 des Innenteils 23 kann derart geformt sein, dass eine erste Kontaktfläche 35 der ersten Seite 33 bei einem Einsetzen der ersten Hauptschiene 1 in die erste Aussparung 31 eine Umlenkung einer Bewegung der ersten Hauptschiene 1 entlang der Einsetzrichtung 104, die von oben nach unten gerichtet ist hin zu der ersten Anschlagsrichtung 105 bewirkt. Die erste Kontaktfläche 35 begrenzt die erste Seite 33 des Innenteils 23 in Richtung des ersten Außenteils 21.

Analog kann die zweite Seite 34 des Innenteils 23 ist derart geformt sein, dass eine zweite Kontaktfläche 36 der zweiten Seite 34 bei einem Einsetzen der zweiten Hauptschiene 2 in die zweite Aussparung 32 eine Umlenkung einer Bewegung der zweiten Hauptschiene 2 entlang der Einsetzrichtung 104 hin zu einer zweiten Anschlagsrichtung 106 bewirkt. Die zweite Anschlagsrichtung 106 zeigt von dem Schwerpunkt 24 aus gesehen nach außen in Richtung des zweiten Anschlages 52. Die zweite Kontaktfläche 36 begrenzt die zweite Seite 34 des Innenteils 23 in Richtung des zweiten Außenteils 22.

Um die Umlenkung der Bewegung der ersten Hauptschiene 1 und der zweiten Hauptschiene 2 derart zu bewirken, kann beispielsweise eine Breite 37 des Innenteils 23, welche entlang der Querrichtung 102 messbar ist, in der Einsetzrichtung 104, das heißt von oben nach unten, stetig zunehmen.

Insbesondere kann eine Form der den Außenteilen 21, 22 zugewandten Seiten 33, 34 des Innenteils 23 durch einen sich in der Einsetzrichtung 104 stetig vergrößernden Querschnitt des Innenteils 23 gegeben sein. Der Querschnitt des Innenteils verläuft parallel zu einer durch die Hauptschienen 1, 2 gebildeten Ebene, insbesondere parallel zu der Hauptrichtung 101 und der Querrichtung 102. Insbesondere vergrößert sich stetig eine Breite des Querschnitts des Innenteils 23 in einer Richtung von oben nach unten, d.h. in der Einsetzrichtung 104.

Um die erste Hauptschiene 1 an dem ersten Querträger 4 zu montieren, kann die erste Hauptschiene 1 zunächst oberhalb des ersten Positionselements 6 positioniert werden. Im Anschluss daran kann die erste Hauptschiene 1 in die Einsetzrichtung 104 in die erste Aussparung 31 bewegt werden. Bei der Bewegung der ersten Hauptschiene 1 in der Einsetzrichtung 104 stößt ein zu dem Innenteil 23 zugewandter erster Flansch 1.1 der ersten Hauptschiene 1 an die erste Kontaktfläche 35. Dadurch wird die erste Hauptschiene 1 in die erste Anschlagsrichtung 105 bewegt.

Es versteht sich, dass sich die erste Hauptschiene 1 beim Einsetzen in die erste Aussparung 31 sowohl in die Einsetzrichtung 104 als auch in die erste Anschlagsrichtung 105 gleichzeitig bewegen kann. Insbesondere kann die erste Hauptschiene 1 schräg entlang der ersten Kontaktfläche 35 hinab bis zu einer Oberseite 38 des ersten Querträgers 4 rutschen. Hierzu kann die erste Kontaktfläche 35 parallel zu einer schräg zu der Querrichtung 102 und parallel zu der Hauptrichtung 101 ausgerichteten Ebene verlaufen.

Fig. 3 zeigt eine Variante, bei welcher das erste Positionselement 6 einstückig ausgebildet ist. Dies bedeutet, dass sowohl das Innenteil 23 als auch die beiden Außenteile 21, 22 aus einem Werkstück hergestellt sind. Insbesondere können die Aussparungen 31, 32 mittels Ausschneidens von Material aus dem Werkstück mit Hilfe von Laserschneiden hergestellt sein.

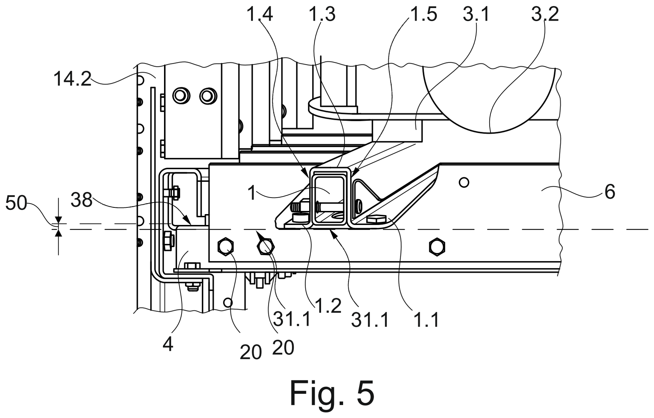

Fig. 2 zeigt eine Variante der Regalstruktur 10, bei welcher eine Oberseite 23.1 des Innenteils 23 eine Oberseite 21.1 des ersten Außenteils 21, eine Oberseite 22.1 des zweiten Außenteils 22, eine Oberseite 1.9 der ersten Hauptschiene 1 und eine Oberseite 2.1 der zweiten Hauptschiene 2 in einer gemeinsamen Ebene liegen. Dies könnte den Vorteil haben, dass Längsrollen, von denen eine erste Längsrolle 3.1 beispielhaft in Fig. 5 gezeigt ist, und Querrollen 3.2 des Shuttles 3 in dieser gemeinsamen Ebene abrollen können. Die gemeinsame Ebene kann daher als Fahrebene des Shuttles 3 betrachtet werden. Die Längsrollen ermöglichen eine Bewegung des Shuttles 3 in der Hauptrichtung 101. Die Querrollen 3.2 ermöglichen eine Bewegung "Querfahrt" des Shuttles 3 in der Querrichtung 102 auf den Oberflächen 21.1, 23.1, 1.9, 2.1, 22.1 und auf Oberflächen 40.1 von Nebenschienen 40, die in Fig. 1 gezeigt sind. Die Querrichtung verläuft senkrecht zur Hauptrichtung.

Die Nebenschienen 40 verlaufen bei den in den Figuren gezeigten Varianten des Regalshuttles 10 senkrecht zu den Hauptschienen 1, 2. Die Oberflächen 40.1 liegen praktischerweise in der Fahrebene. Die Nebenschienen 40 befinden sich in einer Verlängerung der Positionselemente, beispielsweise in Verlängerung des ersten Positionselementes 6 und des zweiten Positionselementes 7. Die Querrollen 3.2 können bei einer Bewegung des Shuttles 3 nacheinander auf der Oberseite 21.1, der Oberseite 1.9, der Oberseite 23.1, der Oberseite 2.1, der Oberseite 22.1 und im Anschluss daran auf der Oberseite der in der Verlängerung des ersten Positionselementes 6 liegenden Nebenschiene abrollen, wenn sich das Shuttle 3 in der Querrichtung 102 bewegt.

Fig. 3 und Fig. 4 zeigen eine Variante, bei welcher ein Abstand 112 zwischen der dem Innenteil 23 zugewandten Seite 41 des ersten Außenteils 21 und einer zur Querrichtung 102 senkrechten Ebene 100, in welcher der erste Anschlagspunkt 61 liegt, von oben nach unten stetig zunehmen kann. Insbesondere kann der Abstand 112 in einem Bereich, in welchem sich die Oberfläche 38 des ersten Querträgers 4 befindet, am größten sein.

Fig. 5 zeigt eine mögliche Ausgestaltung, bei welcher eine Auflagefläche für die erste Hauptschiene 1 ausschließlich durch den ersten Querträger 4, insbesondere durch die Oberseite 38 des ersten Querträgers 4, gebildet sein kann. Bei der in Fig. 5 dargestellten Ausgestaltung der Regalstruktur 10 liegt der erste Flansch 1.1 und ein zweiter Flansch 1.2 der ersten Hauptschiene 1 auf der Oberseite 38 des ersten Querträgers 4 auf. Um die beiden Flansche 1.1, 1.2 ausbilden zu können, kann die erste Hauptschiene 1 in einer Ebene senkrecht zur Hauptrichtung 101 einen hutförmigen Querschnitt aufweisen. Die Flansche 1.1, 1.2 der ersten Hauptschiene 1 erstrecken sich parallel zu dem Querträger 4. Damit die Flansche 1.1, 1.2 des ersten Hauptträgers 1 ausschließlich die Oberseite 38 des ersten Querträgers 4 berühren, liegt eine tiefste Stelle 31.1 der ersten Aussparung 31 unterhalb der Oberseite 38 des ersten Querträgers 4. Zwischen der Oberseite 38 des ersten Querträgers 4 und der tiefsten Stelle 31.1 der ersten Aussparung 31 kann ein vertikaler Abstand 50 vorgesehen sein. Der vertikale Abstand 50 kann beispielsweise in einem Bereich von 1 bis 10 Millimetern liegen, vorzugsweise in einem Bereich von 1 bis 5 Millimeter liegen, beispielsweise 1, 2 oder 3 Millimeter betragen.

Der hutförmige Querschnitt der ersten Hauptschiene 1 kann durch einen Steg 1.3, einen ersten Schenkel 1.4 und einen zweiten Schenkel 1.5 und die beiden Flansche 1.1 und 1.2 der Hauptschiene 1 gebildet sein. Hierbei können sich die beiden Schenkel 1.4, 1.5 der ersten Hauptschiene 1 senkrecht von dem Steg 1.3 nach unten erstrecken und die beiden Flansche 1.1, 1.2 jeweils senkrecht weg von den beiden Schenkeln 1.4, 1.5 in einer Richtung parallel zu der Querrichtung 102 erstrecken. Der erste Schenkel 1.4 und der zweite Schenkel 1.5 verlaufen praktischerweise parallel zu der vertikalen Richtung 103, wenn die erste Hauptschiene 1 in die erste Aussparung 31 eingesetzt ist. Die oben beschriebene erste Berührungsfläche verläuft parallel zu einer Richtung, die der erste Schenkel 1.4 in einem Querschnitt senkrecht zur Hauptrichtung 101 aufweist.

Die perspektivische Ansicht der Regalstruktur 10 gemäß der Fig. 2 zeigt eine Variante des ersten Positionselementes 6, bei welcher das erste Positionselement 6 einen U-förmigen Querschnitt aufweist, der nach unten offen ist und senkrecht zur Querrichtung 102 verläuft. Die U-Form des Querschnittes des ersten Positionselementes 6 ist hierbei durch einen parallel zu der Fahrebene verlaufenden Steg, auf dem die Oberseiten 23.1, 21.1 und 22.1 liegen, einen ersten Schenkel 23.2 und einen zweiten Schenkel 23.3 die sich beide in Bezug zur Fahrebene senkrecht nach unten erstrecken, gebildet. Die beiden Schenkel 23.2, 23.3 des ersten Positionselementes 6 weisen in einer Richtung parallel zu der Hauptrichtung 101 einen inneren Abstand zueinander auf. Der innere Abstand zwischen den beiden Schenkeln 23.2, 23.3 des ersten Positionselementes 6 ist um ein Spielmaß größer als ein äußerer Abstand zwischen zwei senkrecht nach unten verlaufenden Schenkeln des ersten Querträgers 4. Das Spielmaß kann es ermöglichen, das erste Positionselement 6 auf den ersten Querträger 4 von oben aufzusetzen. Die Schenkel des ersten Querträgers 4 können Teil eines Hutprofils des ersten Querträgers 4 sein. In Fig. 3 sind Bohrungen 30 des ersten Positionselementes 6 gezeigt. Der erste Querträger 4 weist an die Bohrungen 30 angepasste weitere in den Figuren nicht dargestellte Bohrungen auf, um das erste Positionselement 6 mithilfe von Schrauben 20 an dem ersten Querträger 4 festzuschrauben. Fig. 2 zeigt das mithilfe der Schrauben 20 an dem ersten Querträger 4 angeschraubte erste Positionselement 6.

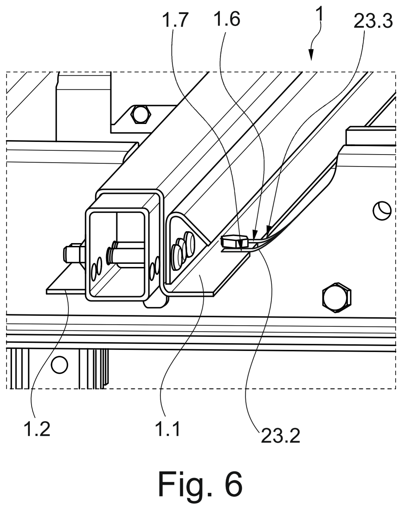

Fig. 6 zeigt eine mögliche Ausgestaltung der ersten Hauptschiene 1, bei welcher zumindest der erste Flansch 1.1 der ersten Hauptschiene 1, welcher zu dem Innenteil 23 zugewandt ist, zwei in der Querrichtung 102 verlaufende Aussparungen aufweist. Die Aussparungen des ersten Flansches 1.1 umfassen bei dieser Variante zumindest eine erste Aussparung 1.6 und eine zweite Aussparung 1.7 des ersten Flansches 1.1. Die Aussparungen 1.6, 1.7 weisen eine Breite, die sich in der Hauptrichtung 101 bemisst, auf, die zumindest einer Dicke der Schenkel 23.2, 23.3 des Innenteils 23 entspricht. Dies ermöglicht es, die erste Hauptschiene 1 von oben in der Einsetzrichtung 104 in die erste Aussparung 31 derart einzusetzen, dass die erste Hauptschiene 1 an dem ersten Anschlag 51 anstößt und dabei die Schenkel 23.2, 23.3 des Innenteils 23 zumindest teilweise in den Aussparungen 1.6, 1.7 aufgenommen sind. Dadurch kann die erste Hauptschiene 1 mit Hilfe des ersten Positionselementes 6 in der Hauptrichtung 101 gesichert werden.

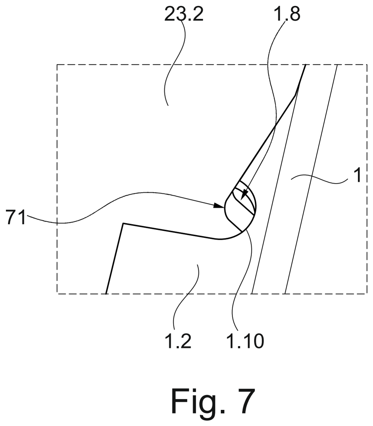

Prinzipiell kann auch vorgesehen sein, dass der zweite Flansch 1.2 der ersten Hauptschiene 1 Aussparungen zum Aufnehmen der Schenkel 23.3, 23.2 aufweist. Beispielhaft ist in Fig. 7 eine erste Aussparung 1.8 des zweiten Flansches 1.2 der ersten Hauptschiene 1 gezeigt. In der ersten Aussparung 1.8 ist der zweite Schenkel 23.2 aufgenommen. Im Rahmen dieser Offenbarung umfasst der erste Schenkel 23.2 eine erste senkrecht verlaufende Wand des ersten Außenteils 21.1, eine erste senkrecht verlaufende Wand des Innenteils 23 und eine erste senkrecht verlaufende Wand des zweiten Außenteils 22. Analog umfasst der zweite Schenkel 23.3 eine zweite senkrecht verlaufende Wand des ersten Außenteils 21.1, eine zweite senkrecht verlaufende Wand des Innenteils 23 und eine zweite senkrecht verlaufende Wand des zweiten Außenteils 22. Weiterhin können der erste Schenkel 23.2 und der zweite Schenkel 23.3 in ihrem jeweiligen unteren Bereich in der Querrichtung 102 durchgängig verlaufen, um das erste Außenteil 21, das Innenteil 23 und das zweite Außenteil 22 miteinander zu verbinden und untere Kanten der ersten Aussparung 31 und der zweiten Aussparung 32 zu bilden.

Praktischerweise ist in einer Höhe auf der Oberseite 38 des ersten Querträgers 4 ein Abstand zwischen der ersten senkrecht verlaufenden Wand des ersten Außenteils 21.1 und einer bogenförmig verlaufenden Kante 1.10 des zweiten Flansches 1.2, welche die Aussparung 1.8 des zweiten Flansches 1.2 begrenzt, in einer Richtung parallel zu der Querrichtung 102 vorgesehen. Dadurch kann sichergestellt werden, dass die erste Hauptschiene 1 an dem ersten Anschlag 51 anschlägt, wenn die erste Hauptschiene 1 in der ersten Anschlagsrichtung 105 beim Einsetzen in die erste Aussparung 31 bewegt wird. Dieser Abstand kann in einem Bereich von 1 bis 10 Millimetern, insbesondere in einem Bereich von 1 bis 5 Millimetern, liegen.

Es versteht sich, dass das zweite Positionselement 7 analog zu dem ersten Positionselement 6 ausgebildet sein kann. Daher kann das zweite Positionselement 7 nach einer der oben beschriebenen Varianten des ersten Positionselementes 6 ausgeführt sein.

Es sei darauf verwiesen, dass die spezifischen Beispiele und Varianten aller obigen Figuren miteinander kombiniert werden können, solange sich die Kombinationen nicht gegenseitig ausschließen.

Obwohl die Erfindung in den Zeichnungen und der vorstehenden Beschreibung ausführlich veranschaulicht und beschrieben ist, ist diese Veranschaulichung und Beschreibung als beispielhaft und nicht einschränkend zu betrachten; die Erfindung ist nicht auf die offenbarten Ausführungsformen beschränkt.

## Patentansprüche

1. Regalstruktur (10), wobei die Regalstruktur (10) ein Paar von Hauptschienen (1, 2) aufweist, die parallel entlang einer Hauptrichtung (101) verlaufen und in einem Abstand zueinander angeordnet sind und auf denen ein Shuttle (3) bewegbar ist, wobei die Regalstruktur (10) Querträger (4, 5) aufweist, die entlang einer quer zu der Hauptrichtung (101) ausgerichteten Querrichtung (102) verlaufen, und wobei die Regalstruktur (10) Positionselemente (6, 7) zum Positionieren der Hauptschienen (1, 2) auf den Querträgern (4, 5) aufweist, wobei bezüglich des jeweiligen Positionselements (6, 7)
- sich das Positionselement (6, 7) entlang der Querrichtung (102) erstreckt und entlang der Querrichtung (102) gesehen zwei Außenteile (21, 22) und ein Innenteil (23) aufweist, wobei jeweils durch eines der Außenteile (21, 22) und das Innenteil (23) eine nach oben offene Aussparung (31, 32) gebildet ist, wobei in den Aussparungen (31, 32) die Hauptschienen (1, 2) angeordnet sind,
- zu dem Innenteil (23) gewandte Seiten (41, 42) der Außenteile (21, 22) jeweils einen Anschlag (51, 52) aufweisen und die Hauptschienen (1, 2) den Anschlag (51, 52) an einem jeweiligen Anschlagspunkt (61, 62) berühren.

2. Regalstruktur (10) nach Anspruch 1, wobei die Hauptschienen (1, 2), die Querträger (4, 5) und die Positionselemente (6, 7) lösbar miteinander verbunden sind und insbesondere jeweils separate Bauteile bilden.

3. Regalstruktur (10) nach Anspruch 2, wobei die Positionselemente Bohrungen zum Befestigen der Positionselemente an den Querträgern aufweisen.

4. Regalstruktur (10) nach einem der vorhergehenden Ansprüche, wobei den Außenteilen zugewandte Seiten des Innenteils (23) derart geformt sind, dass die Seiten des Innenteils (23) bei einem Einsetzen der Hauptschienen (1, 2) in die Aussparungen (31, 32) eine Umlenkung einer Bewegung der Hauptschienen (1, 2) entlang einer Einsetzrichtung (104), die von oben nach unten gerichtet ist, hin zu einer Bewegung der Hauptschienen (1, 2) in Richtung der Anschläge (51, 52) bewirken.

5. Regalstruktur (10) nach Anspruch 4, wobei eine Breite des Innenteils (23) entlang der Querrichtung (102) in der Einsetzrichtung (104) stetig zunimmt, wobei insbesondere eine Form der den Außenteilen zugewandten Seiten des Innenteils (23) durch einen sich in der Einsetzrichtung (104) stetig vergrößernden Querschnitt des Innenteils (23), welcher parallel zu einer durch die Hauptschienen (1, 2) gebildeten Ebene verläuft, gegeben ist.

6. Regalstruktur (10) nach einem der vorhergehenden Ansprüche, wobei das Positionselement (6, 7) einstückig ausgebildet ist.

7. Regalstruktur (10) nach einem der vorhergehenden Ansprüche, wobei eine Oberseite des Innenteils (23), Oberseiten der Außenteile (21, 22) und Oberseiten der Hauptschienen (1, 2) in einer Ebene liegen.

8. Regalstruktur (10) nach Anspruch 7, wobei die Regalstruktur (10) in Verlängerung der Positionselemente (6, 7) entlang der Querrichtung (102) Nebenschienen (40) aufweist, wobei Oberseiten der Nebenschienen (40) in der Ebene liegen, wobei das Shuttle (3) auf den Nebenschienen (40) und dem Positionselement (6, 7) bewegbar ist.

9. Regalstruktur (10) nach einem der vorhergehenden Ansprüche, wobei bezüglich des jeweiligen Außenteils (21, 22) ein Abstand (112) zwischen der dem Innenteil (23) zugewandten Seite des Außenteils (21, 22) und einer zur Querrichtung (102) senkrechten Ebene, in welcher der Anschlagspunkt des Außenteils (21, 22) liegt, zumindest in einem Bereich unterhalb des Anschlags (51, 52) von oben nach unten stetig zunimmt und insbesondere in einem Bereich, in welchem sich eine Oberfläche des Querträgers (4, 5) befindet, am größten ist.

10. Regalstruktur (10) nach einem der vorigen Ansprüche, wobei eine Auflagefläche für die Hauptschienen (1, 2) ausschließlich durch den Querträger (4, 5) gebildet ist, und/oder wobei eine tiefste Stelle (31.1) der Aussparung (31) unterhalb einer Oberseite (38) des Querträgers (4) liegt.

11. Regalstruktur (10) nach einem der vorhergehenden Ansprüche, wobei Ränder (1.1, 1.2) der Hauptschienen (1, 2) sich parallel zu dem Querträger (4, 5) erstrecken und auf einer Oberseite des Querträgers (4, 5) aufliegen, wobei die Hauptschienen (1, 2) in einer Ebene senkrecht zur Hauptrichtung (101) einen insbesondere hutförmigen Querschnitt aufweisen und durch die Hutform die Ränder (1.1, 1.2) gebildet sind, wobei insbesondere die Ränder an der Oberseite des Querträgers (4, 5) verschraubt sind.

12. Regalstruktur (10) nach einem der vorigen Ansprüche, wobei senkrecht zur Querrichtung (102) gesehen das Positionselement (6, 7) einen nach unten offenen zumindest teilweise U-förmigen Querschnitt aufweist, wobei insbesondere die U-Form durch einen Steg und zwei parallele Schenkel (23.2, 23.3) gebildet ist, wobei insbesondere derjenige Rand der Ränder (1.1, 1.2) der jeweiligen Hauptschiene, welcher zu dem jeweiligen Außenteil und/oder Innenteil (23) zugewandt ist, zwei in der Querrichtung (102) verlaufende Aussparungen (1.6, 1.7) zur teilweisen Aufnahme der Schenkel (23.2, 23.3) in den Aussparungen (1.6, 1.7) aufweist, wobei insbesondere der Steg an dem jeweiligen Außenteil eine Bohrung zum Durchschieben eines Schraubwerkzeugs aufweist.

13. Bausatz zum Montieren der Regalstruktur nach einem der vorigen Ansprüche, wobei der Bausatz die Hauptschienen, die Querträger und die Positionselemente umfasst, wobei insbesondere die Hauptschienen eine erste Art von Bauteilen des Bausatzes, die Querträger eine zweite Art von Bauteilen des Bausatzes und die Positionselemente eine dritte Art von Bauteilen des Bausatzes ausbilden, wobei vorzugsweise das jeweilige Positionselement an einem jeweiligen Querträger der Querträger befestigbar ist und in einem montierten Zustand der Regalstruktur das jeweilige Positionselement an dem jeweiligen Querträger befestigt ist.

14. Positionselement (6, 7) zum Positionieren von einem Paar von Hauptschienen (1, 2) einer Regalstruktur (10) für ein Shuttle (3) auf einem quer zu den Hauptschienen (1, 2) verlaufenden Querträger (4, 5), wobei das Positionselement (6, 7) Bohrungen zum Befestigen des Positionselementes (6, 7) an dem Querträger (4, 5) und in seiner Hauptrichtung (101) gesehen zwei Außenteile und ein Innenteil (23) aufweist, wobei jeweils durch eines der Außenteile und das Innenteil (23) eine nach oben offene Aussparung (31, 32) zum Einsetzen der Hauptschienen (1, 2) gebildet ist und die zu dem Innenteil (23) gewandten Seiten (41, 42) der Außenteile jeweils einen Anschlag (51, 52) für die Hauptschienen (1, 2) aufweisen.

15. Regalsystem, aufweisend ein Paar von Hauptschienen (1, 2), mehrere Querträger (4, 5) und zumindest ein Positionselement (6, 7) nach Anspruch 14.
